(19)

Europäisches Patentamt

European Patent Office

Office européen des brevets

(11) **EP 0 973 150 A2**

(12) **EUROPÄISCHE PATENTANMELDUNG**

(43) Veröffentlichungstag:
19.01.2000 Patentblatt 2000/03

(51) Int. Cl.⁷: **G10K 9/122**

(21) Anmeldenummer: **99113647.4**

(22) Anmeldetag: **14.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.07.1998 SI 9800203**

(71) Anmelder:
**Iskraemeco, Merjenje in Upravljanje Energije, D.D.**
**4000 Kranj (SI)**

(72) Erfinder: **Zajec, Damir**
**4000 Kranji (SI)**

(74) Vertreter: **HOFFMANN - EITLE**
**Patent- und Rechtsanwälte**
**Arabellastrasse 4**
**81925 München (DE)**

(54) **Ultraschallwandler und das Verfahren zu seiner Herstellung**

(57) Ultraschallwandler für die Sendung und Empfang von Ultraschall im Gas ist zwecks Kostenreduzierung gruppenweise hergestellt aus einer homogenen, beiderseitig metallisierten piezokeramischen Platte (1), in die zunächst parallele Kanäle eingeschnitten und danach die Seitenwände (7) dieser Kanäle metallisiert und mit der Elektrode (31) kontaktiert werden. Auf derart bearbeitete Platte (1) wird eine akustische Anpassungsschicht (5) aus einer Mischung von Epoxidharz und polymeren hohlen Kügelchen aufgetragen und nach ihrer Erhärtung mit Längs- und Querschnitten einer Diamantsäge in einzelne Wandler zerschnitten. Auf diese Weise kann eine Reduktion der Herstellungskosten um den Faktor 20 oder mehr erreicht werden. Die einzelnen Ultraschallwandler sind prismenförmig und polarisiert in der Dickenrichtung, die beim Erregen des Wandlers schwingt. Die Anpassungsschicht (5) ist unempfindlich gegen organische Lösungsmittel, die oft im Erdgas anwesend sind.

FIG. 1

**Beschreibung**

Bereich der Technik

Die Erfindung betrifft einen Ultraschallwandler, der für das Senden und Empfangen von Ultraschall in Gas bestimmt ist.

Tecnnisches Problem

Die Erfindung löst das technische Problem der Konstruktion und der Herstellung eines piezoelektrischen Ultraschallwandlers mit kleinen Abmessungen, niedrigen Herstellungskosten und guter akustischer Anpassung an das Gas bei Frequenzen über 200 kHz.

Stand der Technik

Ultraschall-Gas-Durchflussmesser verwenden für die Sendung und Empfang von Ultraschallwellen Ultraschall-Sende/Empfangswandler. Die Laufzeitdifferenz in Richtung stromaufwärts bzw. stromabwärts bildet die Basis für die Bestimmung der Geschwindigkeit bzw. des volumenmässigen Durchflusses des Gases. Die Gasverbrauchsmessgeräte in den Haushalten sind Grosserienerzeugnisse, bei denen im Vergleich mit Balgengaszählern für einen erfolgreichen Verkauf von höchster Bedeutung deren niedriger Preis ist. Eine von den Arten der Preisreduzierung des Durchflussmessers ist jedoch eine Preisreduktion des Ultraschallwandlers.

In den bis jetzt bekannten Lösungen (DE 25 37 788, EP 034 70 96) besassen die Ultraschallwandler für die Gas-Durchflussmesser ein aktives piezoelektrisches Plättchen, meistens von runder Form, eine passive Anpassungsschicht für eine bessere akustische Anpassung auf das Gas und ein Gehäuse, in dem der Ultraschallwandler mit einer Vergussmasse vergossen war, die in einzelnen Fällen so gewählt wurde, dass sie die Wandlerschwingung dämpfte, um damit ein breiteres Frequenzband zu erzielen. Eine solche Konstruktion verlangt entweder eine individuelle Herstellung der Ultraschallwandler oder eine gleichzeitige Herstellung einer grösseren Anzahl mit anspruchsvolleren und deswegen auch teureren Werkzeugen.

Der Preis eines piezoelektrischen Ultraschallwandlers ist aus den Kosten des piezoelektrischen Materials, die proportionell zu seiner Masse sind, und den Herstellungskosten gebildet, die unabhängig von den Abmessungen des piezoelektrischen Plättchens sind. Mit bestehender Technologie ist deswegen eine wesentliche Kostensenkung nicht möglich.

Beschreibung der neuen Lösung

Das Wesen der neuen Lösung ist die gleichzeitige Herstellung mehrerer Wandler mit dem Zerschnitt eines grösseren piezoelektrischen Plättchens.

In der Fortsetzung wird die neue Lösung genauer erklärt, auch mit Hilfe der Zeichnungen, in denen zeigen:

Fig. 1    einen erfindungsgemässen Ultraschallwandler,
Fig. 2    ein piezokeramisches Plättchen mit metallisierten Kanälen (im Querschnitt)
Fig. 3    ein piezokeramisches Plättchen mit Kanälen, die mit elektrisch leitendem Harz gefüllt sind (im Querschnitt),
Fig. 4    ein piezokeramisches Plättchen mit einer Anpassungsschicht und angedeuteten Schnitten und
Fig. 5    eine erfindungsgemässe Wandlergruppe (im Querschnitt)

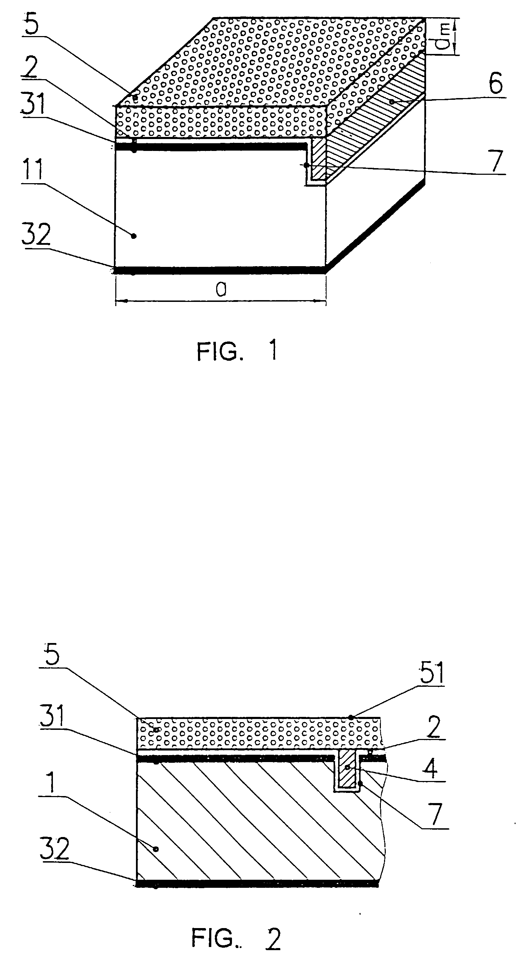

Der erfindungsgemässe Ultraschallwandler besteht aus piezoelektrischer Keramik. Ein piezoelektrisches Plättchen 11 ist der Dicke nach polarisiert, was bedeutet, dass das dipole elektrische Moment in Richtung der Dicke des Plättchens 11 bzw. senkrecht zur Sendefläche 31 des piezoelektrischen Plättchens 11 polarisiert ist (Fig. 1). Die obere Fläche 31 (Fig. 1) und die untere Fläche 32 des Wandlers besitzen mit einem Vakuumverfahren aufgedampfte Metall-Elektroden und sind elektrisch mit einer elektronischen Schaltung verbunden. Bei elektrischer Erregung beginnt das Plättchen in der nächsten oder in der Kombination der nächsten ausgeprägteren Resonanzfrequenzen zu schwingen. Im Fall des Wandlers, welcher der Gegenstand der Erfindung ist, beginnt das Plättchen 11 in planarer Weise zu schwingen. Es handelt sich um eine gleichphasige Ebenenschwingung, bei der sich das piezoelektrische Plättchen 11 gleichphasig in beiden rechteckigen Querrichtungen ausdehnt und zusammenzieht. Infolgedessen deformiert sich das Plättchen 11 in der Dickerichtung in der Gegenphase in Hinsicht auf die Querschwingung. Die so entstandene Dickenschwingung (thickness mode vibration) des Wandlers bildet den Grund für die Bildung von Schallwellen im Gas. Für die Sendung des Ultraschalls wird die obere Fläche 31 des Wandlers verwendet. Wegen der grossen Differenz der akustischen Impedanzen, d.h. des Produkts der Schallgeschwindigkeit und der Dichte im Gas und in der Keramik ist für eine effektvolle Energieübertragung von der oberen Fläche 31 des Wandlers in das Gas und umgekehrt eine Impedanzanpassungsschicht 5 notwendig. Die Resonanzfrequenz des Ultraschallwandlers ist umgekehrt proportionell zu den entsprechenden Abmessungen des piezoelektrischen Plättchens 11. Im Fall einer Planarschwingung ist das die Breite bzw. die Länge des Plättchens 11, im Fall einer Dickenschwingung ist das jedoch die Dicke des Plättchens 11. Im Ultraschallwandler, der der Erfindungsgegenstand ist, wurde wegen annehmbarer Abmessungen des Plättchens 11 in der Querrichtung (ungefähr 5 mm) bei einer Ultraschallfrequenz von einigen Hundert kHz eine planare Schwingungsweise verwendet. Im Fall einer Dickenschwingung mit gleicher Frequenz müsste die Dicke des piezokeramischen Plättchens ungefähr 5 mm betragen, was bei gleicher Grösse der Abstrahlungsfläche eine grössere Masse des piezoelektrischen Materials bedeuten würde. Das bedeutet auch höhere Materialkosten und eine schlechtere Homogenität der Keramik.

Für eine gute Ausnützung der Wandlerenergie ist aber auch eine akustische Anpassung auf das Gas bzw. auf die Luft notwendig. Die bis jetzt bekannte Lösungen verwenden für die Schicht 5 eine Dicke von $d_m = \lambda/4$ , deren spezifische akustische Impedanz (d.h. das Produkt der Schichtdichte und der Schallgeschwindigkeit in dieser Schicht) ist der geometrischen Mitte der akustischen Impedanzen der piezoelektrischen Keramik und des Gases nahe. Im Fall einer piezoelektrischen Keramik und Luft als Medium, mit akustischen Impedanzen 34 MRayl bzw. 410 Rayl bei monochromatischer Arbeitsweise beträgt die theoretisch verlangte Impedanz der Anpassungsschicht 5 0,12 MRayl. Das kann mit einer Reduzierung der Dichte der Schicht 5 und einer Reduzierung der Schallgeschwindigkeit in der Schicht 5 erreicht werden, wobei sich jedoch die Schwächung von Ultraschallwellen in der Schicht 5 nicht wesentlich erhöhen darf. Bei bisherigen Lösungen (z. B. DE 25 37 788) ist diese Schicht als ein Gemisch von gläsernen oder Quarzkügelchen ($SiO_2$) und von viskoelastischem Harz (z.B. Epoxidharz oder Polystyrol) gebildet. In Fall der Verwendung von Polystyrol und von Glaskügelchen mit einer Dichte von 0,3 g/cm$^3$ wurde eine spezifische akustische Impedanz von 0,36 MRayl, bei Verwendung von Quarzkügelchen mit einer Dichte von 0,18 g/cm$^3$ jedoch ungefähr von 0,26 MRayl erreicht. Bei Verwendung von Benzol als Lösungsmittel reduzierte sich diese Impedanz bei einer Dichte der Schicht 5 von ungefähr 0,16 g/cm$^3$ auf ungefähr 0,21 MRayl. Wegen der Empfindlichkeit von Polystyrol auf verschiedene organische Lösungsmittel, die im Erdgas anwesend sein können, ist ein derartiges Gemisch für eine Verwendung in einem solchen Medium ungeeignet. In diesem Fall ist besser ein Gemisch von hohlen Glaskügelchen und von Epoxidharz geeignet. Mit dieser Mischung kann eine Dichte von 0,5 - 0,6 g/cm$^3$ und eine Schallgeschwindigkeit von ungefähr 2200 - 2400 m/s erreicht werden, was bedeutet, dass die spezifische akustische Impedanz ungefähr 1 - 1,4 MRayl beträgt.

Die Anpassungsschicht 5 für Gase, die organische Lösungsmittel beinhalten, kann im Sinn der Reduzierung der Impedanz mit einer Verwendung von polymeren hohlen Kügelchen und niedrigviskosem Epoxidharz verbessert werden. Mit der Verwendung von Impregnationsepoxiharz LY 5138 und von hohlen Kügelchen aus Acrylnitril der Herstellerfirma EXPANCEL wurden Dichten von 0,34 g/cm$^3$ und Schallgeschwindigkeiten von 1470 m/s erreicht, was bedeutet, dass die Impedanz ungefähr O,5 MRayl beträgt, wobei der mittlere Durchmesser der hohlen Kügelchen ungefähr 60 µm und deren Dichte ungefähr 0,03 g/cm$^3$ betrug. Leider ist aber die Schallschwächung ungefähr viermal so hoch als bei einer Schicht mit gläsernen Hohlkügelchen. Bei dickeren Schichten ist das wegen höherer Abschwächung vom Nutzsignal störend, jedoch sind beim Übergang auf eine höhere Arbeitsfrequenz f und bei einer Mischung mit niedrigerer Schallgeschwindigkiet $c_m$ dünnere Anpassungsschichten notwendig

$$d_m = \lambda/4 = c_m/f$$

In diesem Fall ist die Abschwächung geringer.

Bei einem Ultraschallwandler mit einer quadratförmigen Abstrahlungsfläche mit einer Seitenlänge a = 4,55 mm beträgt die Arbeitsfrequenz f = 350 kHz, was bei einer erreichten Schallgeschwindigkeit von $c_m$ = 1470 m/s in der Anpassungsschicht 5 eine Dicke $d_m$ von ungefähr 1 mm bedeutet (Fig. 1). Das beträgt ungefähr einen Viertel der Dicke der Schicht 5, die Ultraschallwandler besitzen, die auf Frequenzen von 150 - 200 kHz arbeiten und eine Anpassungsschicht 5 aus Epoxidharz und hohlen Glas- oder Quarzkügelchen verwenden. Wegen viermal höherer Verluste wegen der Absorption in der Schicht 5, die polymere hohle Kügelchen enthält, ist diese Mischung nur in denjenigen Ultraschallwandlern verwendbar, die mit Frequenzen über 300 kHz arbeiten. In diesem Fall sind Verluste wegen der Schwächung nicht höher als bei einer Mischung, die hohle Glaskügelchen enthält und bei Wandlern, die mit Frequenzen unter 200 kHz arbeiten. Im Fall der akustischen Anpassung aufs Gas ist jedoch das Gemisch mit polymeren hohlen Kügelchen wegen niedrigerer akustischer Impedanz günstiger. Eine theoretische Beurteilung für den Übergang der Energie aus der Piezokeramik ins Gas für den eindimensionalen und monochromatischen Fall kann mit Hilfe der Theorie der Transmissionslinien wiedergegeben werden

$$T_e = \frac{4.Z_k.Z_p}{(Z_k+Z_p)^2.\cos^2 k_m d_m + (Z_m + \frac{Z_k.Z_p}{Z_m})^2.\sin^2 k_m d_m}$$

wo $T_e$ den Koefizienten der Energieübertragung zwischen der Piezokeramik und dem Gas, $Z_k$ und $Z_p$ die spezifische akustische Impedanz der Piezokeramik bzw. des Gases, $k_m$ den Wellenvektor in der Anpassungsschicht, $d_m$ die Dicke dieser Schicht und $Z_m$ ihre spezifische akustische Impedanz bedeuten. Falls $d_m = \lambda/4$ ist, ist

$$T_e = \frac{4 \cdot Z_k \cdot Z_p}{(Z_m + \frac{Z_k \cdot Z_p}{Z_m})^2}$$

Bei akustischer Impedanz der Keramik $Z_k$ = 34 MRayl und des Gases $Z_p$ = 300 Rayl beträgt bei einer Anpassungsschicht 5 mit polymeren hohlen Kügelchen mit einer Impedanz $Z_m$ = 0,5 MRayl die Energieübertragung -8 dB, bei einer Anpassungsschicht 5 aus hohlen Glaskügelchen mit einer Impedanz von $Z_m$ = 1,4 MRayl jedoch -17 dB. Das bedeutet, dass bei einem Wandler mit einer Frequenz von 350 kHz und polymeren Kügelchen in der Anpassungsschicht 5 die Signalamplituden um 18 dB höher als bei einem Wandler mit einer Frequenz von 170 kHz und hohlen Glaskügelchen in der Anpassungsschicht 5 sind.

Im Fall von Wandlern mit einer Serienresonanzfrequenz $f_s$ von ungefähr 350 kHz und einer Parallelfrequenz $f_p$ von ungefähr 390 kHz beträgt die Basisseitenlänge a des Wandlers 4,55 mm, die Dicke der piezokeramischen Platte 2 mm, die Kanaltiefe 0,8 mm, die Breite der eingeschnittenen Kanäle 0,4 mm, die Tiefe des Kontaktteiles der Wandlerseite 0,1 mm und die Dicke der Anpassungsschicht 5 $d_m$ = 0,95 mm. Das Maximum der Übertragungsfunktion eines Wandlerpaares befindet sich ungefährt bei $f_s$, die Bandbreite bei -3 dB beträgt jedoch 40 kHz. Ein derart hergestellter Wandler besitzt eine Signalanstiegszeit $\tau$ = 20 s, was einen Signalanstieg von 10% auf 90% des Maximalwertes in 7 Perioden bedeutet. Zusätzliche mechanische Dämpfung dieses Wandlers ist nicht notwendig, weswegen die Einbettung elastisch und mit einem Verguss in eine weiche polyurethanische Vergussmasse ausgeführt ist, die eine ausreichende akustische Isolierung vor mechanischen Schwingungen bietet, die sich teilweise über das Gehäuse ausbreiten könnten. Wegen der geringen Masse des Wandlers bietet eine solche Vergussmasse auch eine ausreichende Stütze bei der Sicherung seiner Positionierung.

Falls die Notwendigkeit besteht, dass in dem Teil des Raumes, der breiter als die Länge der Seite a des Wandlers ist, im behandeltem Fall ist das mehr als 5 mm, eine annähernd ebene Welle gebildet wird, besteht die Möglichkeit der Verwendung von mehreren parallel angeordneten und gleich orientierten Wandlern, die in eine gemeinsame Polyurethan-Vergussmasse vergossen sind. Ein solcher Aufbau kann ein- oder mehrreihig sein. Wegen der gleichphasigen und auf der Oberfläche mehr ausgeglichenen Schwingungsamplituden der oberen Strahlungsfläche 51 des einzelnen Wandlers (Fig. 2) wird auch die Schwingung des beschriebenen Aufbaus mehr homogen und gleichphasig als bei einem grösseren Wandler mit gleichen lateralen Abmessungen sein. Das bedeutet dann die Bildung einer mehr homogenen ebenen Welle.

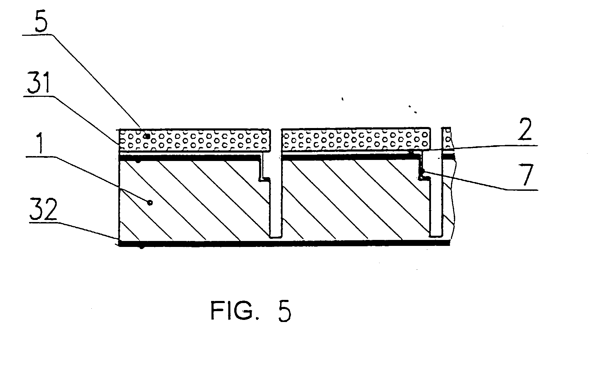

Weitere Möglichkeit ist der Aufbau einer Gruppe von Ultraschallwandlern, deren untere Seiten 32 (Elektroden) untereinander mit einer dünnen Schicht einer unzerschnittenen Keramikplatte 1 verbunden sind, wie das auf Fig. 5 dargestellt ist. Eine solche Verbindung ermöglicht eine Sicherstellung der gegenseitigen Lage und Orientierung der einzelnen Ultraschallwander der Gruppe, gleichzeitig bewirkt sie jedoch nicht eine derartige Koppelung der mechanischen Schwingungen zwischen den einzelnen Wandlereinheiten, die wesentlich die Schwingung einer solchen Gruppe beeinflussen würde.

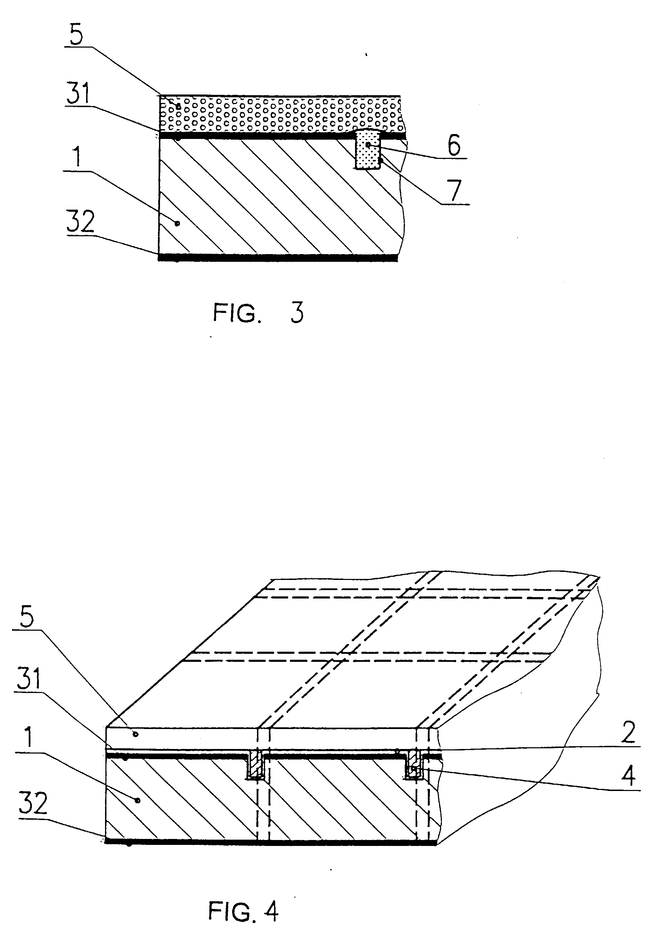

Für die Herstellung der oben beschriebenen Ultraschallwandler mit möglichst geringen Kosten wurde ein besonderes Verfahren entwickelt, das aus einer beiderseitig metallisierten piezoelektrischen Platte 1 hervorgeht, in die zuerst parallele Kanäle eingeschnitten werden. Danach werden die Seitenwände der Kanäle mit einem Vakuumverfahren hergestellter lötbaren Metallschicht 2 metallisiert oder mit einer Füllung der Kanäle mit einem leitbaren Epoxidharz 6 (Fig. 3) in elektrischen Kontakt mit der oberen Elektrode 31 gebracht. Im Fall einer Vakuumauftragung wird die Arbeit in zwei Schritten erledigt und zwar wird zunächst im Vakuumverfahren eine Ni-Schicht oder ein ähnliches Metall für die Sicherstellung der Haftung auf der Keramik und dann noch eine Au-Schicht für gute Lötbarkeit aufgetragen. In beiden Fällen befinden sich die Dicken der Metallschichten im Submikrometerbereich. Die Kanäle werden danach mit Abdecklack zugefüllt. Die Füllung wird mit einer bewegbaren Spritze ausgeführt, deren Bewegung entlang des Kanals mit dem Lackdurchfluss synchronisiert ist. Die Abdeckung wird danach im Ofen bei einer Temperatur von ungefähr 100°C verfestigt. Danach folgt die Anbringung einer Mischung aus niedrigviskosem Epoxidharz und von polymeren hohlen Kügelchen, die mit einem Abstreicher gleichmässig über die ganze Oberfläche der Keramikplatte 1 verteilt wird. Eine derart behandelte Platte 1 muss noch quer und längs in einzelne Plättchen 11, d.h. in Ultraschallwandler zerschnitten werden. Das Verfahren wird genauer beschrieben mit Hilfe eines Ausführungsbeispiels.

Die piezoelektrische Platte 1 wird mit einem thermischen Klebestoff auf eine Palette befestigt, die eine wiederholbare Einspannungslage in Vorrichtungen in allen Bearbeitungsphasen sicherstellt. Das Einschneiden wird mit einer Säge für das Einschneiden in keramische Materialien durchgeführt, die wie üblich pneumatisch geführte Vorschübe mit einer Genauigkeit von 0,005 mm und hohe Umdrehungszahlen von 15000 U/min ermöglicht. Das Sägeblatt besitzt eine Dicke von 0,35 mm und hat am Schneiderand Diamantenstaub angeklebt, weswegen die Schneidebreite ungefähr 0,4 mm beträgt. Während des Sägevorgangs wird die Schneidestelle gekühlt, so dass auf diese Weise die Depolarisierung des piezoelektrischen Materials wegen Überhitzung vermieden wird. Nach beendetem Einschneiden der Kanäle wird die keramische Platte gut von den Resten des Kühlungsmittels und der Späne gereinigt. Die Seitenwände der Kanäle werden danach metallisiert und mit einem Vakuumverfahren (vacuum sputtering device) angebrachten lötbaren Metallschicht 2 in elektrischen Kontakt mit der Elektrode 31 gebracht. Die Kanäle können auch mit einem leitbaren Epoxidharz 6 ausgefüllt werden (Fig. 3). Im Fall einer Metallauftragung im Vakuum wird dieses Verfahren in zwei Schritten durchgeführt und es wird zunächst für die Sicherstellung einer guten Haftung auf der Keramik eine Ni- oder ähnliche Schicht und dann für eine gute Lötbarkeit eine Au-Schicht angebracht. In beiden Fällen befinden sich die Schichtdicken in Submikrometerbereich. Die Kanäle werden dann mit einem Abdecklack 4 (Schutzlack) ausgefüllt und zwar mit Hilfe einer bewegbaren Spritze, deren Bewegung längs des Kanals mit dem Fluss des Lacks aus der Spritze synchronisiert ist. Die Verfestigung des Abdecklacks wird im Ofen bei einer Temperatur von ungefähr 100°C durchgeführt. Es folgt das Auftragen einer Mischung von niederviskosem Epoxidharz und von polymeren hohlen Kügelchen, die mit einem Abstreicher gleichmässig über die Oberfläche der keramischen Platte verteilt werden. Der Abstreicher ist ein Teil einer Zweckvorrichtung mit Führungen, die eine Planparallelität der Auftragung im Bereich von ±0,01 mm ermöglichen. Die Ebnung der Mischung mit Hilfe des Abstreichers verläuft in mehreren Schritten über eine einige Zehntel mm dicke Polyester- (oder ähnliche) Folie, die mit einem Trennmittel überzogen und mit ihrer Unterfläche im Kontakt mit der Mischung ist. Der Zweck der Folie ist zu verhindern, dass bei der Ebnung das Aufstreichmesser die Folie mit sich ziehen würde. Eine derartige Auftragungsweise ist vor allem deswegen notwendig, weil in der Mischung nicht innere Spannungen entstehen dürfen, die eine Kompression der polymeren hohlen Kügelchen bedeuten würden. Deswegen ist der Einspannteil der Vorrichtung für die Auftragung der Anpassungsmischung derart ausgebildet, dass das überflüssige Gemisch viel Raum für die Auspressung besitzt. Nach der Verfestigung der Mischung wird die Schicht des Anpassungsgemisches auf das verlangte Mass geschliffen. Eine derart bearbeitete Platte 1 wird noch mit Längs- und Querschnitten auf die einzelnen Wandler zerschnitten (Fig. 4). Die Bearbeitung wird mit der gleichen Säge ausgeführt, mit der schon die Kanäle eingeschnitten wurden. Nach dem Zerschnitt wird die Palette mit der zerschnittenen Platte 1 auf eine Temperatur von ungefähr 120°C erwärmt, damit die Haftung des Klebestoffes nachlässt. Die unteren Elektroden 32 der Wandler werden von den Resten des Klebestoffes mit einem organischen Lösungsmittel (z.B. 1,1-Dichlor-1-Fluorethane) gereinigt. Die Längsschnitte verlaufen nach ausgefüllten Kanälen derart, dass auf der Seitenfläche 7 des Kanals ein Metallisierungsbereich 2 erhalten wird, der sich im elektrischen Kontakt mit der oberen Elektrode 31 befindet. Im Fall einer Auftragung im Vakuum (Fig. 2) muss der Abdecklack 4 mechanisch entfernt werden, wonach an den metallisierten Teil der Seitenfläche 7 ein elektrischer Leiter angelötet wird. Wenn die Kanäle mit einem leitenden Epoxidharz ausgefüllt sind, wird die Kontaktierung mit einem gleichen Harz ausgeführt. In Hinsicht auf die Technologie der Wandlerherstellung und die Art der Kontaktierung ist eine empfehlenswerte Dicke für die piezoelektrische Platte 1 ungefähr 2 mm. Eine zu dünne Platte 1 verursacht Schwierigkeiten beim Kontaktieren, wogegen eine zu dicke Platte höhere Materialkosten verursacht.

Ein verwendbares Frequenzband für die Messungen eines Gasdurchflusses mit Hilfe des Überfliegens des Ultraschallsignals durch das Gas reicht bis ungefähr 500 kHz. Als Form eines Wandlers ist ein Prisma vorgeschlagen, bei dem die verlangte Arbeitsfrequenz die Querabmessung der piezokeramischen Platte bestimmt. Für einen Frequenzbereich von 200 bis 500 kHz befindet sich die Querabmessung des Wandlers im Bereich von 3 - 8 mm. Am günstigsten ist es, wenn die Grundfläche des Prisma ein Quadrat mit einer Seitenlänge $a = \lambda/2$ ist, da auf diese Weise beide Querschwingungen im gleichen Mass und gleichphasig zu der Schwingung der oberen, d.h. der Sendefläche des Wandlers beitragen. Was die Grösse der ursprünglichen piezoelektrischen Platte 1 betrifft, ist es günstig, wenn eine möglichst grosse Platte verwendet wird. Auf der anderen Seite bedeuten jedoch grössere seitliche Abmessungen der piezoelektrischen Platten 1 eine schlechtere Homogenität des piezoelektrischen Materials bei gleichen technologischen Kosten der Herstellung bzw. einen Anstieg dieser Kosten bei der Sicherstellung gleicher Homogenität. Sinnvolle maximale Abmessungen der Platte 1 reichen deswegen von 50 x 50 mm bis 110 x 110 mm, abhängig von den technologischen Fähigkeiten des Lieferanten. In vorliegendem Fall wurden die Wandler mit der Seitenlänge des Quadrats a = 4,55 mm aus einer Platte 1 mit den Abmessungen von 60 x 60 mm herausgeschnitten und aus einer Platte 1 wurden 144 Wandler hergestellt. Das ermöglichte im Vergleich zur bisherigen Technologie eine Reduzierung der Herstellungskosten um den Faktor 20. Alle, aus der gleichen Platte 1 hergestellten Wandler besitzen vergleichbare akustische und elektrische Eigenschaften, was den Grad der Reziprozität der Wandlerpaare erhöht und die Bildung von Wandlergruppen ermöglicht. Solche Gruppen sind geeignet für die Bildung von Wellenfronten mit gewünschter Form bzw. für die gleichzeitige Sendung und Empfang des Ultraschalls.

## Patentansprüche

1.  Ultraschallwandler, bestimmt für die Sendung und für den Empfang von Ultraschall im Gas, bestehend aus einem piezokeramischen Plättchen 11 und einer akustischen Anpassungsschicht 5, dadurch gekennzeichnet, dass das Plättchen (11) in der Dickenrichtung polarisiert und prismaförmig ist, dass auf die Seitenfläche (7) des abgeschnittenen Kanals eine lötbare Metallschicht aufgetragen ist, die im elektrischen Kontakt mit der benachbarten Elektrode (31) ist und dass die Anpassungsschicht (5) aus einer Mischung von polymeren hohlen Kügelchen und Epoxidharz gebildet ist.

2. Ultraschallwandler nach Anspruch 1, dadurch gekennzeichnet, dass die Seitenfläche (7) nicht metallisiert ist, an sie jedoch ein elektrisch leitendes Epoxidharz (6) aufgetragen ist, das im elektrischen Kontakt mit der Elektrode (31) ist.

3. Gruppe von Ultraschallwandlern nach Ansprüchen 1 oder 2, dadurch gekennzeichnet, dass diese untereinander mit dem Teil der unzerschnittenen piezoelektrischen Platte (1) verbunden sind.

4. Verfahren zur Herstellung eines Ultraschallwandlers, dadurch gekennzeichnet, dass ein Einschneiden der Kanäle in eine Seite der beidseitig metallisierten piezokeramischen Platte (1), Metallisierung der Seitenwände (7) dieser Kanäle, Kontaktierung der metallisierten Seitenwände (7) mit der Elektrode (31), Füllung der Kanäle mit einem Abdecklack (4), Auftragung einer Anpassungsschicht (5), nach deren Verfestigung ein Schleifen bis auf die vorgeschriebene Dicke und schliesslich ein Zerschnitt der derart behandelten Platte (1) durchgeführt werden.

5. Verfahren nach Anspruch 4, dadurch gekennzeichnet, dass die Seitenwände (7) nicht metallisiert werden, die Kanäle jedoch anstatt mit einem Abdecklack (4) mit einem elektrisch leitenden Epoxidharz ausgefüllt werden.

6. Verfahren nach Ansprüchen 4 oder 5, dadurch gekennzeichnet, dass die Tiefe eines oder mehrerer Einschnitte weniger als die Dicke der Platte (1) beträgt, so dass derart eine oder mehrere Wandlergruppen entstehen, die untereinander mechanisch mit dem Teil der unzerschnittenen Platte (1) verbunden sind.

FIG. 1

FIG. 2

FIG. 3

FIG. 4

8

5

31

1

32

2

7

FIG. 5